# EUROPÄISCHE PATENTSCHRIFT

(11) **EP 3 827 129 B1**
(45) Veröffentlichungstag und Bekanntmachung des Hinweises auf die Patenterteilung: **22.01.2025**
(21) Anmeldenummer: 19746070.2
(22) Anmeldetag: 25.07.2019
(51) Int. Cl.: E02B 15/10

(54) **VORRICHTUNG UND VERFAHREN ZUM AUFNEHMEN VON ÖL VON EINER WASSEROBERFLÄCHE**
APPARATUS AND METHOD FOR PICKING UP OIL FROM THE SURFACE OF WATER
DISPOSITIF ET PROCÉDÉ D'ABSORPTION D'HUILE D'UNE SURFACE D'EAU

(30) Priorität: 26.07.2018 DE 102018118139
(43) Veröffentlichungstag der Anmeldung: 02.06.2021
(73) Patentinhaber: Rheinische Friedrich-Wilhelms-Universität Bonn, 53113 Bonn (DE)
(72) Erfinder: BARTHLOTT, Wilhelm, 53173 Bonn (DE); MOOSMANN, Markus, 78733 Aichhalden (DE); MAIL, Matthias, 68753 Waghäusel (DE)
(74) Vertreter: Michalski Hüttermann & Partner Patentanwälte mbB
(86) Internationale Anmeldenummer: PCT/EP2019/070089
(87) Internationale Veröffentlichungsnummer: WO 2020/021031

(56) Entgegenhaltungen:
- GB-A- 1 396 397
- GB-A- 1 442 219
- US-A- 3 667 608
- US-A- 4 126 556
- US-A1- 2015 027 939

## Beschreibung

Die Erfindung betrifft das Gebiet der Entfernung von Öl von Wasseroberflächen, insbesondere eine Vorrichtung und ein Verfahren zur Entfernung von Öl von Wasseroberflächen.

Die zu großen Teilen auf der Verbrennung von Öl und Kraftstoff beruhende Energiegewinnung und der hierzu notwendige Transport von Roh- oder Mineralöl bringen es mit sich, dass die Umwelt vielfach durch Öl verschmutzt wird. Besonders betroffen sind Gewässer, beispielsweise durch Tankerhavarien oder beschädigte Pipelines. Dieses Öl soll möglichst rasch entfernt werden. Zur Aufnahme von Ölfilmen auf der Wasseroberfläche stehen bereits unterschiedliche Verfahren zur Verfügung. Ölbindemittel, zumeist pulverförmige Stoffe, absorbieren bzw. binden das Öl und verbleiben anschließend entweder auf der Wasseroberfläche, von wo sie wieder entfernt werden müssen, oder sinken auf den Grund des Gewässers. Bei großen Havarien werden weiter Ölsaugsperren eingesetzt, um das Öl auf dem Wasser zu umschließen und abzusaugen. Diese sind jedoch nicht in Ufernähe einsetzbar und auch ein prophylaktischer Einsatz ist nicht sinnvoll. Ebenfalls werden bei akuten Ölverschmutzungen Ölbindematten, die das Öl absorbieren, oder so genannte Skimmer eingesetzt, wobei das Öl aktiv von der Oberfläche abgesaugt wird.

Die WO 00/00702 A1 beschreibt eine Ölentfernungs- und Öltransportvorrichtung und ein diese nutzendes Verfahren zum Entfernen und zum Transport von Öl. Das Öl wird dabei in ein Schüttgut absorbiert, wobei das Schüttgut einen Einlassbereich und einen Auslassbereich aufweist, und das Öl über eine Membran in den Einlassbereich des Schüttguts geleitet wird. Entfernt wird das Öl aus dem Auslassbereich des Schüttguts. Die Membran weist eine durchschnittliche Porengröße von nicht mehr als 100 Mikrometern auf, so dass das Öl kontinuierlich durch die Membran in den Einlassbereich des Schüttguts transportiert wird und kontinuierlich aus dem Auslassbereich des Schüttguts in ein Reservoir abgeführt wird. Hierbei kann beispielsweise eine Druckdifferenz mittels Vakuum über die Membran aufgebaut werden oder das Öl über eine Pumpe in den Behälter befördert werden. Die WO 00/00701 A1 beschreibt ein Bauteil zum Flüssigkeitstransport, das mindestens einen Bulkbereich und einen Wandbereich aufweist, der den Bulkbereich vollständig umgibt, und der einen Membranöffnungsbereich und einen offenen Portbereich umfasst.

C. Zeiger el al. offenbaren in Bioinspiration & Biomimetics 2016, 11, 056003, Mikrostrukturen auf superhydrophoben Pflanzenblättern wie die der Schwimmfarne der Gattung *Salvinia* als Inspiration für Ölaufnehmende Materialien. Diese Schwimmfarne besitzen auf ihrer Oberfläche hydrophobe, Wasser abweisende bzw. mit Wasser unbenetzbare Haare mit hydrophilen, also Wasser anziehenden, Stellen an den Spitzen, die Wasser an die Haarstrukturen binden und auf ihrer Oberfläche einen Luftfilm unter Wasser halten können. Dieses Phänomen wird als Salvinia-Effekt bezeichnet. Die Schwimmfarne können auf ihrer Blattoberfläche Öl aus Wasser absorbieren. Jedoch wird keine Verwendungsmöglichkeit dieses Effekts beschrieben.

Die US 4 126 556 A offenbart eine Vorrichtung gemäß dem Oberbegriff des Anspruchs 1.

Der vorliegenden Erfindung lag die Aufgabe zu Grunde, eine Vorrichtung, die zum Aufnehmen von Öl von einer Wasserfläche verwendbar ist, bereitzustellen. Die Aufgabe wird gelöst durch eine Vorrichtung zum Aufnehmen von Öl von einer Wasseroberfläche gemäß dem unabhängigen Anspruch 1, umfassend einen Behälter zur Aufnahme des Öls und eine Oltransportierende Einrichtung, wobei ein Bereich der Öl-transportierenden Einrichtung in Flüssigkeitsverbindung zu der Wasseroberfläche bringbar ist und sich ein weiterer Bereich der Öl-transportierenden Einrichtung in dem Behälter befindet, wobei das Öl über die Öl-transportierende Einrichtung in den Behälter transportierbar ist. Die Öl-transportierende Einrichtung ist hierbei aus einem, hydrophoben, vorzugsweise superhydrophoben, Flächengebilde ausgebildet, dessen Oberfläche filamentförmige Strukturen aufweist, welche derart ausgebildet sind, dass sie unter Wasser eine Schicht aus Luft auf der Oberfläche des hydrophoben, vorzugsweise superhydrophoben, Flächengebildes halten.

Erfindungsgemäß wird eine Vorrichtung zum Aufnehmen von Öl von einer Wasseroberfläche auf Basis lufthaltender Oberflächen bereitgestellt. Unter einer lufthaltenden Oberfläche werden Oberflächen verstanden, die in der Lage sind dauerhaft oder zumindest für die Dauer der Anwendung eine Schicht Luft im untergetauchten Zustand zu halten. Im Folgenden wird daher von "lufthaltenden" Oberflächen ausgegangen. Die Wasseroberfläche kann jede Wasserfläche oder wässrige Substanz sein, die mit Öl oder einer ölhaltigen Substanz verunreinigt sein kann, insbesondere die Oberfläche von Gewässern wie Meeren, Seen, Flüssen oder Kanälen.

Die Verwendung lufthaltender Oberflächen zur Ölentfernung ermöglicht, dass das Öl die Luftschicht ersetzt und über die lufthaltende Oberfläche in ein Gefäß transportiert werden kann. Die Vorrichtung umfasst im Wesentlichen ein unter Wasser lufthaltendes Flächengebilde, insbesondere Textil, und einen damit verbundenen Auffangbehälter. Das hydrophobe, vorzugsweise superhydrophobe, Flächengebilde weist Oberflächenstrukturen auf, die, unter Wasser getaucht, eine Luftschicht, stabil auf der Oberfläche halten, so dass das Flächengebilde trotz eines Kontakts mit Wasser nicht nass wird. Kommt das hydrophobe, vorzugsweise superhydrophobe, Flächengebilde mit Öl oder einer öligen Substanz in Kontakt, wird dieses adsorbiert und ersetzt die unter Wasser vorhandene Luftschicht.

Das Flächengebilde ist hydrophob, vorzugsweise superhydrophob. Unter "hydrophob" wird im Sinne der vorliegenden Anmeldung verstanden, dass der Kontaktwinkel zwischen Wasser und dem Flächengebilde größer als 90° ist. Bei besonders hohem Kontaktwinkel bezeichnet man Oberfläche als "superhydrophob". Im Sinne der vorliegenden Anmeldung wird unter dem Begriff einer "super-hydrophoben" Oberfläche verstanden, dass der Kontaktwinkel der Oberfläche gegenüber Wasser größer als 150° ist. Der Kontaktwinkel lässt sich beispielsweise mittels Tropfenkonturanalyse (Drop Shape Analysis, DSA) unter Verwendung eines Kontaktwinkelmessgeräts bestimmen. Bevorzugt liegt der Kontaktwinkel zu Wasser bei mehr als 100°, vorzugsweise größer als 140°, besonders bevorzugt größer als 150°.

Das hydrophobe, vorzugsweise superhydrophobe Flächengebilde ist vorzugsweise oleophil, insbesondere zumindest teilweise oleophil. Unter dem Begriff "oleophil" wird vorliegend verstanden, dass das Flächengebilde eine Affinität zu Öl bzw. Ölhaltigen Substanzen oder anderen unpolaren Substanzen aufweist und die Oberfläche leicht durch diese benetzt wird. Lipophile Materialien sind typischerweise durch einen Öl-Kontaktwinkel von 0° oder einen geringen Kontaktwinkel charakterisiert, beispielsweise gemessen unter Verwendung eines Kontaktwinkel-Goniometers.

Das hydrophobe, vorzugsweise superhydrophobe Flächengebilde kann vollständig oleophil sein. Eine Beschichtung mit fluorcarbonhaltigen Verbindungen oder Silikonen kann beispielsweise eine gleichzeitig hydrophobe und oleophile Oberfläche zur Verfügung stellen.

Der Begriff "Öl" bezeichnet im Sinne der vorliegenden Erfindung ein Rohöl oder Mineralöl sowie ölige oder Öl-haltige Substanzen. Das Öl wird an der Oberfläche des Flächengebildes lediglich adsorbiert. Das Öl wird jedoch nicht absorbiert. Hierdurch kann es über das Flächengebilde transportiert und in den Behälter abgegeben werden. Das Flächengebilde kann teilweise auf der Wasserfläche aufliegen, wobei wenigstens ein Ende in das Wasser eintaucht, so dass es an einem Ende zu der Wasserfläche in Flüssigkeitsverbindung steht. Hierdurch können über das Flächengebilde Kapillarkräfte aufgebaut werden. Das Flächengebilde hat zumindest an einer Stelle Kontakt zur Wasseroberfläche, sodass es in Kontakt mit dem Öl kommen und dieses aufnehmen kann. Ein Meniskus hin zum Flächengebilde, wie er an der Kontaktstelle an der Wasseroberfläche entstehen kann, ist dabei hilfreich, jedoch nicht zwingend erforderlich. Das Flächengebilde kann teilweise, beispielsweise an einem Ende, in Wasser eintauchen, so dass das Flächengebildet mit Ausnahme des Bereichs der Gas- bzw. Luftschicht Wasserkontakt hat. Das Flächengebilde ist vorzugsweise nicht vollständig untergetaucht. Bei einem vollständig untergetauchten Flächengebilde wäre ein Kontakt zur Oberfläche und somit zum Öl nur gegeben, wenn das lufthaltende Flächengebilde von unten an das Öl herangeführt würde, sodass es am Öl-Wasser-Übergang in Kontakt mit dem Öl kommt.

Ein Teil des Flächengebildes, befindet sich für den Transport des Öls unter der Wasseroberfläche und steht in Flüssigkeitsverbindung zum Wasser. Das andere Ende des Flächengebildes befindet sich in dem Behälter. Hierbei befindet sich ein Teil des Flächengebildes in dem Behälter unterhalb des Niveaus der Wasseroberfläche. Hierdurch kann das Öl die Luftschicht verdrängen und in den Behälter fließen. Ohne auf eine bestimmte Theorie festgelegt zu sein, wird angenommen, dass der Transport über Physisorption und/oder Van-der-Waals-Kräfte erfolgt.

Wenn die Luft verdrängt und das Flächengebilde mit Öl benetzt ist, resultiert die treibende Kraft für den Transport des Öls bzw. der öligen Substanz in den Behälter aus dem Höhenunterschied des Flächengebildes außen auf der Wasseroberfläche und innen am Boden des Behälters. Solange sich das Ende des hydrophoben, vorzugsweise superhydrophoben Flächengebildes, das sich im Auffangbehälter befindet, unterhalb der Wasseroberfläche und/oder des Ölfilms befindet, wird das Öl an der Oberfläche des Flächengebildes transportiert, bis dessen gesamte Oberfläche bedeckt ist, und fließt in den Auffangbehälter.

Durch den Eintrag des Öls in den Behälter steigt der Ölstand im Inneren des Behälters und dessen Gewicht nimmt zu. Hierdurch sinkt der Behälter tiefer in das Wasser ein. Solange der Level des Öls innen im Behälter unterhalb der Wasseroberfläche liegt, wird Öl von der Wasseroberfläche gesammelt und in den Behälter fließen. Sobald der Öllevel innerhalb des Auffangbehälters gleich mit dem Wasserlevel ist stoppt der Transport.

Durch zusätzliche Gewichte und/oder Schwimmkörper kann das Gewicht des Behälters so tariert werden, dass der Behälter schwimmt, der Boden des Behälters sich im ungefüllten Zustand jedoch stets unterhalb der Wasseroberfläche befindet. Da Öl eine geringere Dichte als Wasser hat, kann der Auftrieb durch externe Gewichte und/oder Schwimmkörper so eingestellt werden, dass der Behälter auch im gefüllten Zustand nicht absinkt.

Von Vorteil ist bei dem beschriebenen Arbeitsprinzip der Vorrichtung insbesondere, dass diese weder aktiv Öl saugende Pumpen benötigt, noch Material verbraucht, das das Öl absorbiert und anschließend entsorgt werden muss. Die Vorrichtung stellt eine passiv arbeitende, geräuschlose Lösung zur Verfügung. Es wird kein Kraftstoff für den Betrieb einer aktiv arbeitenden Maschine verbraucht, und damit werden auch keine zusätzlichen Emissionen erzeugt. Es wird keine zusätzliche Umweltbelastungen durch das Entfernen des Öls erzeugt. Dies erlaubt, dass die Vorrichtung sogar in Naturschutzgebieten verwendbar ist. Das Öl wird gesammelt und in einen Sammelbehälter überführt. Das Flächengebilde kann ggf. sogar gereinigt und wieder verwendet werden. Somit entsteht neben dem aufgesammelten Öl kein zusätzlicher Abfall. Insbesondere kann die Vorrichtung auch prophylaktisch eingesetzt werden. Die Anordnung aus Auffanggefäß und öladsorbierendem Flächengebilde ist vorzugsweise kompakt und kann der Umgebung angepasst werden.

Der gefüllte Behälter kann entleert werden, in Ausführungsformen, in denen ein Deckel vorgesehen ist, beispielsweise durch Öffnen des Deckels.

Das Flächengebilde kann im Innenraum des Behälters beispielsweise am Boden des Behälters oder an der Seitenwand fixiert werden. Vorzugsweise ist das Flächengebilde lösbar fixiert. Das Flächengebilde ist dann austauschbar, oder kann durch physikalische Verfahren wie Waschen und/oder Zentrifugieren gereinigt und wieder verwendet werden.

Die Öl-transportierende Einrichtung ist erfindungsgemäß aus einem hydrophoben, vorzugsweise superhydrophoben Flächengebilde ausgebildet. Das Flächengebilde ist vorzugsweise ein Textil. Das Flächengebilde kann weiter eine Folie sein. Wesentlich ist, dass eine Oberfläche des Flächengebildes Strukturen aufweist, die unter Wasser eine Luftschicht auf der Oberfläche halten können. Diese können filamentförmige und/oder gitterartige Strukturen sein.

Ein "Filament" oder "filamentförmige Struktur" im Sinne dieser Anmeldung ist jedes längliche Gebilde, gleich welchen Materials, das die geforderten Eigenschaften aufweist. Im Textilbereich wird unterschieden zwischen abstehenden Haaren, abstehenden Fasern und Filamenten, die eine große Länge haben. Im Sinne dieser Anmeldung wird der Begriff "Filament" jedoch für jede Art Struktur verwendet, die Enden aufweist und ist für diese Anmeldung gleichbedeutend mit denen im textilen Bereich verwendeten Begriffen "Faser" oder "Haar". Ein Filament im Sinne dieser Anmeldung ist auch eine längere Struktur, die mit zwei oder mehr Punkten an eine Oberfläche gebunden ist. Der Bereich zwischen zwei Kontaktpunkten definiert dann im Sinne dieser Anmeldung die Länge des Filaments. Diese können Strukturen einer Größenordnung im Bereich von Nano- bis Millimetern sein. Die Filamente weisen eine größere Länge als Durchmesser auf. Das Verhältnis von Durchmesser zu Länge (Durchmesser:Länge) liegt für die Filamente vorzugsweise zwischen 1:2 und 1:40. Geeignete Längen der Filamente liegen im Bereich von ≥ 1 µm bis ≤ 6000 µm, vorzugsweise im Bereich von ≥ 2 µm bis ≤ 3000 µm. Die Durchmesser von Filamenten lassen sich beispielsweise mittels Rasterelektronenmikroskopie vermessen. Soweit die Fasern über die Länge unterschiedliche Durchmesser aufweisen, wird der Durchmesser in der Mitte des Filaments (50% der Länge) zugrunde gelegt. Pro mm² Oberfläche sind vorzugsweise im Bereich von ≥ 1 bis ≤ 1×10⁶ Filamente gebunden. Die Dichte der Filamente liegt bevorzugt im Bereich von ≥ 5 bis ≤ 5000, vorzugsweise im Bereich ≥ 20 bis ≤ 1000 Filamenten pro mm² Oberfläche.

Die Elastizität, bestimmt als E-Modul, der Filamente liegt vorzugsweise im Bereich von ≥ 10⁴ N/m² bis ≤ 10¹² N/m², bevorzugt im Bereich von ≥ 10⁴ N/m² bis ≤ 10¹⁰ N/m². Die Elastizität erlaubt eine Auslenkung der Filamente. Die Elastizität erlaubt es, auch bei Strömungen und Druckänderungen, die Gas- bzw. die Luftschicht auf der Oberfläche zu halten. Insbesondere ist die Oberfläche der Filamente hydrophob, vorzugsweise superhydrophob, vorzugsweise zumindest teilweise oder vollständig lipophil. Die Filamente sind in der Lage, dauerhaft oder zumindest für die Dauer der Anwendung, unter Wasser eine Luftschicht an der Oberfläche des Flächengebildes zu halten. Diese kann durch das Öl verdrängt werden, wodurch eine Verwendung zu dessen Aufnahme von einer Wasseroberfläche zur Verfügung gestellt werden kann.

Die Form der filamentförmigen Strukturen bzw. Filamente kann beliebig sein. Beispielsweise können die Filamente spitz zulaufende, abgerundete oder abgeflachte Enden aufweisen. Insbesondere können die Filamente strukturell und/oder chemisch anisotrop sein. Vorzugsweise können die Filamente strukturell anisotrop sein, d. h. dass es Bereiche gibt, in denen die Filamente eingeschnitten sind, insbesondere in denen sie Hinterschneidungen, vorzugsweise geschlossene Hinterschneidungen ausbilden. Derartige strukturell anisotrope Strukturen können ähnlich wie z.B. *Salvinia molesta* aufgebaut sein. Hier kann durch einen starren, beliebig langen Stiel die Verformung lediglich an dem auf dem Stiel befindlichen Bereich mit geschlossenen Hinterschneidungen, so genannten "Körbchen", stattfinden. Die Verformung kann wie oben beschriebenen gemessen werden. In vorteilhafter Weise kann durch starre lange Stiele ein höheres Volumen der Gasschicht bereitgestellt werden, insbesondere ein sehr hohes Luftvolumen. Die Erhöhung des Gasvolumens bedeutet eine Steigerung der Aufnahmefähigkeit für Öl.

Die Filamente können auch Bereiche aufweisen, die chemisch anisotrop sind, insbesondere bei denen die Oberflächeneigenschaften dazu führen, dass Teile der Filamente amphiphob, insbesondere hydrophob, sind, während andere amphiphil, insbesondere hydrophil sind. Amphiphil bedeutet, dass der Kontaktwinkel in diesen Bereichen zwischen der Oberfläche und der Flüssigkeit < 90° ist, hydrophil, dass der Kontaktwinkel zu Wasser < 90° ist. Vorzugsweise ist die Spitze der Filamente, d.h. der das Wasser kontaktierende Bereich der Filamente hydrophil. Hierdurch verlieren die Spitzen auch bei Druckschwankungen den Kontakt zum Wasser nicht. In einer besonders bevorzugten Ausführungsform weisen die Filamente sowohl chemisch anisotrope Bereiche als auch strukturell anisotrope Bereichen auf.

Das Flächengebilde ist als Abstandtextil ausgebildet. Unter einem "Abstandtextil" werden vorliegend Abstandstextilien, insbesondere Abstandsgewirke, mit zwei voneinander beabstandeten Decklagen und mit Abstandsfäden, welche die Decklagen miteinander verbinden, verstanden. Abstandstextilien mit voneinander beabstandeten oberen und unteren Decklagen sowie dazwischen verlaufenden Abstandsfäden zeichnen sich bei einem insgesamt leichten Aufbau durch gute, gleichmäßige druckelastische Eigenschaften aus. Dies begünstigt den Aufbau einer stabilen Luftschicht. Abstandstextilien können als Gewirk, Gestrick oder Gewebe ausgeführt sein. Die Abstandsfäden sind bindungstechnisch fest in der oberen und unteren Decklage angeordnet. Die Abstandsfäden entsprechen somit den filamentartigen Strukturen des Flächengebildes. Als Fadenmaterial für die Abstandsfäden sind beispielsweise technische Polyamidgarne, Polyester oder Polyethylen verwendbar. Das Fadenmaterial kann ein Polyfilamentgarn sein. Dieses kann aus Polyester ausgebildet sein und beispielsweise einen Filamentdurchmesser von bis zu 0,5 mm, bevorzugt 0,2 mm aufweisen. Vorzugsweise sind Monofile als Abstandsfäden verwendbar, beispielsweise ausgebildet aus Polyamid, Polyester, Polypropylen oder Polyethylen. Diese weisen eine hohe Biegesteifigkeit auf und zeichnen sich durch eine hohe Elastizität aus.

Die filamentförmigen Strukturen bilden Abstandsfäden, welche zwei beabstandete Lagen des Flächengebildes miteinander verbinden, und das Flächengebilde ist als ein 3D-Abstandtextil ausgebildet.

Die Form des hydrophoben Flächengebildes kann variieren. Es können sowohl einzelne Streifen wie auch durchgehende Adsorberflächen, insbesondere Textilien, eingesetzt werden. In Ausführungsformen ist das Flächengebilde in Form einer Mehrzahl an streifenförmigen Flächen ausgebildet. In weiteren Ausführungsformen ist das Flächengebilde in Form einer durchgehenden Fläche, die um den Behälter herum angeordnet ist, ausgebildet. Das Flächengebilde kann auch in Form einer Kombination aus streifenförmigen Flächen und größeren durchgängigen Flächen ausgebildet sein.

Die Form des Behälters ist beliebig. Der Behälter kann beispielsweise zylindrisch oder kugelförmig sein, oder die Form eines Würfels, Quaders oder Kegels besitzen. Auch die Dimensionierung des Behälters ist flexibel. Es sind kleine Konstruktionen, wie Laborfläschchen mit wenigen Zentimetern Höhe und Durchmesser verwendbar, wie große Auffangbehälter, die beispielsweise die Größe eines Fasses oder Tonne aufweisen können. In Bezug auf den Behälter ist wesentlich, dass sich ein Teil des Flächengebildes in dem Behälter unterhalb des Niveaus der Wasseroberfläche befindet, denn nur, so lange sich das im Auffangbehälter befindliche Ende der hydrophoben, vorzugsweise superhydrophoben Oberfläche unterhalb der Wasseroberfläche bzw. des Ölfilms befindet, kann das Öl in den Behälter fließen.

Die Vorrichtung kann in Ausführungsformen als eine schwimmende Vorrichtung ausgelegt sein. In anderen Ausführungsformen kann sich der Behälter vollständig unter Wasser befinden.

In Ausführungsformen der Vorrichtung kann entsprechend vorgesehen sein, dass der Behälter im Wasser schwimmt oder an der Wasseroberfläche arretiert ist, wobei sich der Boden des Behälters im ungefüllten Zustand unterhalb der Wasseroberfläche befindet. Eine solche Ausführungsform wird im Folgenden auch als "Ölschwimmer" bezeichnet.

In Ausführungsformen kann das Flächengebilde hierbei über die Seitenwand des Behälters oder durch schlitzförmige Öffnungen in der Seitenwand in den Behälter geführt werden. Da der Ölfilm auf dem Flächengebilde dünn ist, kann dieser auch dann über die Oberfläche in den Behälter transportiert werden, wenn das Flächengebilde über die Seitenwand des Behälters oberhalb des Wasserspiegels in den Behälter geführt wird. Hierbei kann der Rand des Behälters bis zu 10 cm oder sogar bis 20 cm über die Wasseroberfläche ragen. Das Flächengebilde kann auch durch schmale, schlitzförmige Öffnungen in der Seitenwand des Behälters in dessen Inneres geführt werden. Die Öffnung kann sich sowohl oberhalb wie auch unterhalb der Wasseroberfläche befinden. Vorzugsweise ist die Öffnung ausreichend breit, um einen Transport des Öls über die Oberfläche zu ermöglichen. Vorzugsweise ist die Höhe der Öffnung gering, um zu verhindern, dass Wasser eintritt. Dies wird dadurch unterstützt, dass das Flächengebilde sowohl im Öl-unbenetzten, lufthaltenden, Zustand wie auch im ölbenetzten Zustand hydrophob und damit wasserabweisend ist.

In Ausführungsformen ist der Behälter mit einem Deckel versehen. Dies hat den Vorteil, dass Spritzwasser oder Regenwasser nicht in den Behälter eindringen können. Der Deckel kann mit Abstandshaltern an der Außenseite des Behälters befestigt sein. Hierbei können die Abstandshalter durch ein zuvor angebrachtes Flächengebilde geführt werden und dieses damit durchdringen. Der Deckel kann in anderen Ausführungsformen durch eine innenliegende, vorzugsweise zentrale, Schraube an dem Behälter befestigt sein. Vorzugsweise weist der Deckel ein Ventil zum Druckausgleich auf. Bevorzugt ist ein nach außen luftdurchlässiges Ventil an der Oberseite angebracht.

Eine Entleerung des Behälters bzw. eine Entnahme des Öls kann beispielsweise durch Auspumpen des Behälters erfolgen. Alternativ kann das Öl durch einfaches Ausschütten aus dem Behälter entfernt werden. Hierbei sind Ausführungsformen vorteilhaft, bei denen das Öl von dem Flächengebilde zunächst auf einen Randbereich, der ggf. eine Ablaufrinne aufweisen kann, und von dort in den Auffangbehälter läuft. Alternativ kann die Vorrichtung insgesamt aus dem Wasser genommen werden. Kleine Behältnisse können mit einem Ventil am Boden ausgestattet sein, sodass die Vorrichtung kurzzeitig aus dem Wasser gehoben werden kann und das Öl durch das Ventil ablaufen kann. Weiterhin kann ein austauschbarer Innenbehälter vorgesehen sein.

In weiteren Ausführungsformen der Vorrichtung kann vorgesehen sein, dass der Behälter ein geschlossenes Behältnis ist, wobei das geschlossene Behältnis eine Einrichtung zum Druckausgleich aufweist. Ein geschlossenes Behältnis kann unter die Wasseroberfläche verbracht werden. Eine solche Ausführungsform wird im Folgenden auch als "Öltaucher" bezeichnet. Die Arbeitsweise entspricht dem der schwimmenden Vorrichtung. Wenn sich der Auffangbehälter vollständig unter Wasser befindet, hat dies den Vorteil, dass dauerhaft gewährleistet ist, dass sich die Enden des Flächengebildes unterhalb der Wasseroberfläche befinden. Eine Einrichtung zum Druckausgleich innerhalb des geschlossenen Auffangbehältnisses ist notwendig, da dieses zu Beginn mit Luft gefüllt ist und ohne Möglichkeit der Entlüftung kein Öl in das geschlossene Behältnis gelangen kann. Die Vorrichtung kann einen Füllstandsanzeiger umfassen, der mit einem Stopfen versehen sein kann.

Die treibende Kraft für den Öltransport resultiert aus der Höhendifferenz zwischen der Stelle, an der das Öl aufgenommen wird, was im Regelfall der Wasseroberfläche entspricht, und der Stelle, an der es wieder abgegeben wird. Dies kann in dieser Ausführungsform eine Hohlkugel sein. Vorteile liegen darin, dass diese Differenz in den Ausführungsformen des Öltauchers größer gestaltet werden kann als bei Ausführungsformen des Ölschwimmers. Dies erlaubt bei gleichen Materialien einen schnelleren Transport. Zusätzlich ist der Transport ausschließlich nach unten gerichtet, im Gegensatz zum Ölschwimmer, bei dem das Öl zu Beginn bei unbenetztem Textil entgegen der Erdanziehungskraft erfolgen muss. Die Hohlkugel kann mehrere Öffnungen aufweisen, durch die das Öl ins Innere transportiert wird. Hierdurch kann eine weitere Steigerung der Effizienz erzielt werden.

Ein weiterer Aspekt der Erfindung betrifft ein Verfahren gemäß dem unabhängigen Anspruch 7 zum Aufnehmen von Ol von einer Wasseroberfläche mittels eines Behälters zur Aufnahme des Öls und einer Öl-transportierenden Einrichtung, wobei ein Bereich der Öl-transportierenden Einrichtung in Flüssigkeitsverbindung zu der Wasseroberfläche gebracht wird und sich ein weiterer Bereich der Öl-transportierenden Einrichtung in dem Behälter befindet, wobei die Öl-transportierende Einrichtung aus einem hydrophoben, vorzugsweise superhydrophoben Flächengebilde ausgebildet ist, dessen Oberfläche filamentförmige Strukturen aufweist, welche derart ausgebildet sind, dass sie unter Wasser eine Schicht aus Luft auf der Oberfläche halten, wobei das Öl über das hydrophobe, vorzugsweise superhydrophobe Flächengebilde in den Behälter transportiert wird.

Für die Beschreibung des Behälters zur Aufnahme des Öls und der Öl-transportierenden Einrichtung wird auf die vorstehenden Ausführungen zur Vorrichtung verwiesen. Wird die Vorrichtung in Wasser, auf oder unter eine Wasseroberfläche verbracht, und befindet sich ein Teil des Flächengebildes, unter der Wasseroberfläche, so dass ein Ende in Flüssigkeitsverbindung zu der Wasserfläche steht, und befindet sich der Teil des Flächengebildes, der sich in dem Behälter befindet, unterhalb des Niveaus der Wasseroberfläche, kann das Öl die Luftschicht verdrängen und in den Behälter fließen.

In Ausführungsformen des "Ölschwimmers", in denen der Behälter im Wasser schwimmt oder an der Wasseroberfläche arretiert ist, wobei sich der Boden des Behälters im ungefüllten Zustand unterhalb der Wasseroberfläche befindet, kann dies durch Verwendung von Gewichten an Behälter und/oder freien Enden des Flächengebildes erzielt werden. In Ausführungsformen eines geschlossenen Behälters, der unter die Wasseroberfläche verbracht wird, kann dieser auch durch Verankerung am Grund der Wasserfläche unter der Oberfläche gehalten werden. Ein solcher "Öltaucher" kann sich beispielsweise etwa 30 cm unterhalb der Oberfläche befinden. Bis zu einer Tiefe von 30 cm kann eine auf der Oberfläche des Flächengebildes gehaltene Luftschicht durch Öl ersetzt werden und das Öl in den Behälter abfließen.

Ein weiterer Aspekt der Erfindung betrifft die Verwendung einer erfindungsgemäßen Vorrichtung umfassend einen Behälter zur Aufnahme des Öls und eine Öl-transportierende Einrichtung, wobei ein Bereich der Öl-transportierenden Einrichtung in Flüssigkeitsverbindung zu der Wasseroberfläche bringbar ist und sich ein weiterer Bereich der Öl-transportierenden Einrichtung in dem Behälter befindet, wobei das Öl über die Öl-transportierende Einrichtung in den Behälter transportierbar ist, wobei die Öl-transportierende Einrichtung aus einem hydrophoben, vorzugsweise superhydrophoben Flächengebilde ausgebildet ist, dessen Oberfläche filamentförmige Strukturen aufweist, welche derart ausgebildet sind, dass sie unter Wasser eine Schicht aus Luft auf der Oberfläche halten, zum

Aufnehmen von Öl von einer Wasseroberfläche. Für die Beschreibung der Vorrichtung wird auf die vorstehenden Ausführungen zur Vorrichtung verwiesen.

Beispiele und Figuren, die der Veranschaulichung der vorliegenden Erfindung dienen, sind nachstehend angegeben.

Hierbei zeigen die Figuren:
- Figur 1: eine schematische Darstellung der Aufnahme von Öl von einer Wasseroberfläche mittels einer Vorrichtung gemäß einer ersten Ausführungsform der Erfindung in Fig. 1A, 1B, 1C, und Fig. 1D.
- Figur 2: eine schematische Darstellung einer Vorrichtung zum Aufnehmen von Öl von einer Wasseroberfläche gemäß einer ersten Ausführungsform der Erfindung.
- Figur 3: eine schematische Darstellung einer Vorrichtung zum Aufnehmen von Öl von einer Wasseroberfläche gemäß einer zweiten Ausführungsform der Erfindung.

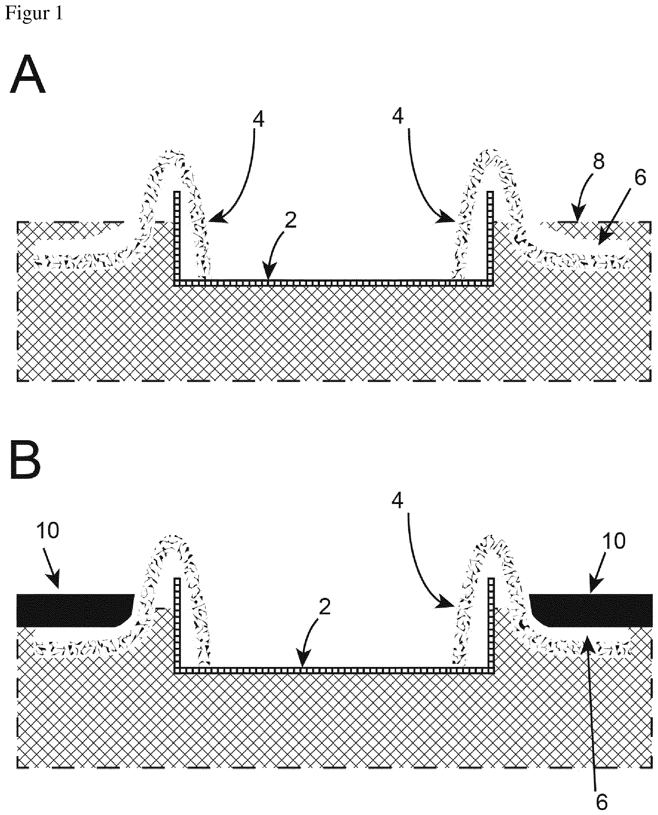

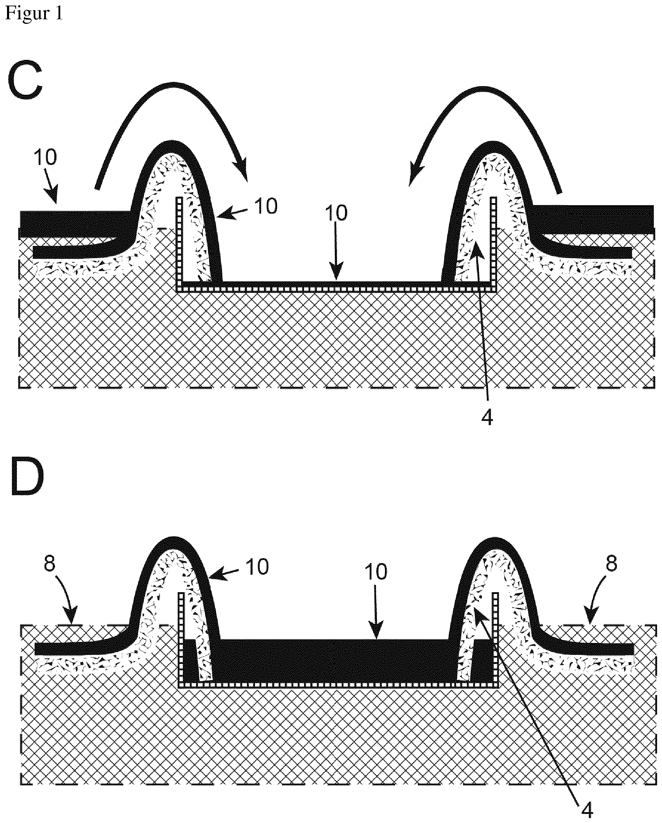

Figur 1 zeigt in den Figuren 1A, 1B, 1C und Fig. 1D eine schematische Darstellung der Aufnahme von Öl 10 von einer Wasseroberfläche 8 mittels einer schwimmenden Vorrichtung. In Figur 1 A ist eine schwimmende Vorrichtung zum Aufnehmen von Öl 10 von einer Wasseroberfläche 8 gezeigt. Die Vorrichtung umfasst einen Behälter 2 zur Aufnahme des Öls und eine Öl-transportierende Einrichtung ausgebildet einem superhydrophoben Flächengebilde 4. Der Behälter 2 schwimmt auf dem Wasser, wobei der Boden des Behälters 2 tiefer im Wasser liegt als das superhydrophobe Flächengebilde 4. Der Rand des Auffangbehälters 2 ragt über die Wasseroberfläche 8 hinaus. Ein Ende des Flächengebildes 4 ist am Boden des Behälters 2 fixiert, wodurch sich ein Teil des Flächengebildes 4, das sich in dem Behälter 2 befindet, unterhalb des Niveaus der Wasseroberfläche 8 befindet. Das Flächengebilde 4 ist über den Rand des Behälters 2 gelegt. Die Oberfläche schwimmt auf der Wasseroberfläche 8 auf, wobei beispielsweise durch ein kleines Gewicht das dem Behälter 2 abgewandte Ende unter der Wasseroberfläche 8 gehalten wird. Somit befindet sich ein Teil des Flächengebildes 4 unter der Wasseroberfläche 8 und steht in Flüssigkeitsverbindung zum Wasser. Das superhydrophobe Flächengebilde 4 weist auf der Oberfläche filamentförmige Strukturen auf, die derart ausgebildet sind, dass sie unter Wasser eine Luftschicht 6 auf der Oberfläche halten.

Figur 1B zeigt eine weitere Darstellung der in Figur 1A gezeigten Vorrichtung. Auf der Wasseroberfläche 8 hat sich ein Ölfilm 10 ausgebreitet. In Figur 1C kommt das Öl 10 auf der Wasseroberfläche 8 in Kontakt mit dem Flächengebilde 4. Das Öl 10 wird von den filamentförmigen Strukturen des Flächengebildes 4 adsorbiert. Die Luftschicht 6 wird dabei durch das Öl 10 ersetzt. Das Flächengebilde 4, beispielsweise ein Flocktextil, ist vorzugsweise nicht nur superhydrophob, sondern auch oleophil. Unter Wasser mit Wasser benetzt zu sein bedeutet einen energetisch sehr ungünstigen Zustand, daher wird Luft unter Wasser gezogen und als Luftschicht 6 auf der Oberfläche gehalten. Dies ist energetisch zwar ebenfalls ein sehr ungünstiger Zustand, da die Luft entgegen dem Auftrieb gehalten werden muss, jedoch günstiger, als wenn das superhydrophobe, oleophile Flächengebilde 4 mit Wasser benetzt wäre. Kommt das Öl 10 mit dem Flächengebilde 4 in Kontakt, wird die oleophile Oberfläche mit Öl 10 benetzt. Es wird ein energetisch günstigerer Zustand erreicht, wenn die Luftschicht 6 ersetzt und das textile Flächengebilde 4 mit Öl 10 benetzt wird und die auf der Oberfläche gehaltene Luft kann aufsteigen. Das Öl 10 wird nach unten transportiert und die durch den energetisch ungünstigen Vorgang des Lufthaltens gespeicherte Energie wird hierbei abgegeben. Auch über Wasser findet ein Transport statt, wobei das Öl 10 in den Behälter 2 fließen kann. Das Öl 10 wird hierdurch in den filamentförmigen Strukturen des Flächengebildes 4 entlang der Oberfläche in den Behälter 2 transportiert. Sofern der Rand des Behälters 2 nicht zu hoch über der Wasseroberfläche 8 steht, kann das Öl 10 über den Rand in den Behälter 2 fließen. Solange sich das Ende des superhydrophoben Flächengebildes 4, das sich im Auffangbehälter 2 befindet, unterhalb der Wasseroberfläche 8 und/oder des Ölfilms 10 befindet, wird das Öl 10 wieder abgegeben. Wenn sich das Ende im Auffangbehälter 2 oberhalb der Wasseroberfläche 8 und/oder des Ölfilms 10 befindet, stoppt der Transport zu dem Zeitpunkt, an dem der Flock vollständig benetzt ist.

Durch den Eintrag des Öls 10 in den Behälter 2 steigt der Ölstand im Inneren des Behälters 2 und dessen Gewicht nimmt zu. Hierdurch sinkt der Behälter 2 tiefer in das Wasser ein. Solange der Level des Öls 10 innen im Behälter 2 unterhalb der Wasseroberfläche 8 liegt, wird Öl 10 von der Wasseroberfläche 8 gesammelt und fließen in den Behälter 2. In Figur 1D befindet sich kein Öl 10 mehr an der Wasseroberfläche 8.

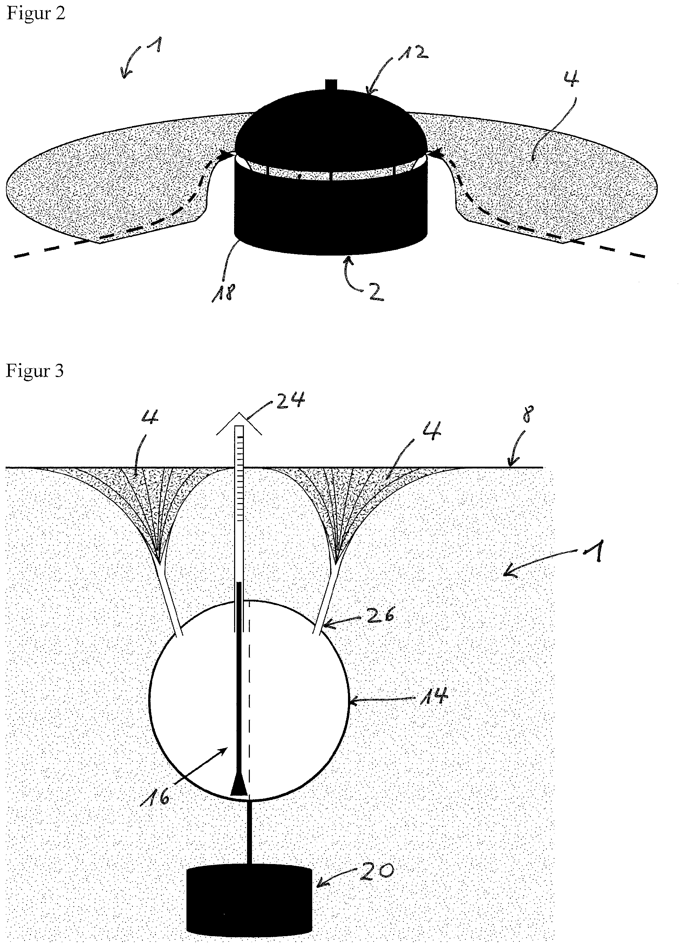

Figur 2 zeigt schematisch eine Ausführungsform einer Vorrichtung 1 zum Aufnehmen von Öl 10 von einer Wasseroberfläche 8, die als eine schwimmende Vorrichtung 1, als so genannter "Ölschwimmer", ausgelegt ist. Die Vorrichtung 1 umfasst einen Behälter 2 zur Aufnahme des Öls und eine Öl-transportierende Einrichtung ausgebildet von einem superhydrophoben Flächengebilde 4. Dieses weist auf der Oberfläche filamentförmige Strukturen auf, die derart ausgebildet sind, dass sie unter Wasser eine Schicht 6 aus Gas auf der Oberfläche halten. Das Flächengebilde 4 hat Form einer durchgehenden Fläche, die um den Behälter 2 herum angeordnet ist. Das Flächengebilde 4 wird durch schlitzförmige Öffnungen 18 in der Seitenwand in den Behälter 2 geführt. Der Behälter 2 ist mit einem Deckel 12 versehen.

Figur 3 zeigt schematisch eine Ausführungsform einer Vorrichtung 1 zum Aufnehmen von Öl 10 von einer Wasseroberfläche 8, die als eine tauchende Vorrichtung, als so genannter "Öltaucher", ausgelegt ist. Der Behälter zur Aufnahme des Öls 10 ist ein geschlossenes Behältnis 14 in Form einer Hohlkugel. Diese wird mittels einer Verankerung 20 unter der Wasseroberfläche 8 gehalten. Das geschlossene Behältnis 14 weist zwei Eingangsöffnungen 26 auf, durch die das superhydrophobe Flächengebilde 4 in das geschlossene Behältnis 14 eingeführt wird. Die treibende Kraft für den Öltransport resultiert aus der Höhendifferenz zwischen der Wasseroberfläche 8, an der das Öl 10 aufgenommen wird, und dem tiefer liegenden Behältnis 14, in das das Öl 10 transportiert wird. Der Transport ist in der tauchenden Ausführungsform ausschließlich nach unten gerichtet. Die Vorrichtung 1 weist eine Einrichtung zum Entlüften und zum Druckausgleich 16 innerhalb des Behältnisses 14 auf. Die Einrichtung zum Entlüften und zum Druckausgleich ist durch einen Deckel 24 gegen Regen und Spritzwasser geschützt.

### Beispiel 1

### Ölaufnahme mittels einer schwimmenden Vorrichtung

Zur Herstellung einer Öl-aufnehmenden Vorrichtung wurde ein Labor-Glasbehälter einer Höhe von 5 cm, Durchmesser 2 cm (Rollrand-Schnappdeckelglas 45x22 mm, Scherf Präzision Europa GmbH) auf einer Petrischale mit Unterlegscheiben als Verankerung fixiert, wodurch ein Standfuß und ausreichend Gewicht gewährleistet waren. Ein Flocktextil einer Faserlänge von 1,2 mm und einer Dichte von 13 Fasern pro mm² (SwissFlock AG) wurde auf Streifen einer Länge von 15 cm und Breite von 1 cm zugeschnitten. Die Oberfläche des Flocktextils wurde mit Tegotop 210 (Evonik Industries) hydrophobiert. Ein Ende des Flocktextilstreifens wurde an den Innenseiten des Glasbehälters festgeklebt, so dass das Ende auf dem Boden des Behälters auflag.

Die Vorrichtung wurde in einem Aquarium platziert. Das Aquarium wurde mit Wasser befüllt, wobei der Rand des Auffangbehälters ca. 5 mm über die Wasseroberfläche hinaus ragte. Das Flocktextil schwamm auf der Wasseroberfläche auf. Durch ein kleines Gewicht wurde das auf dem Wasser aufliegende Ende unter der Wasseroberfläche gehalten und hielt eine Luftschicht. Aufgrund der superhydrophoben Eigenschaft des Flocktextils bildete sich ein Meniskus zwischen Wasseroberfläche und Textil aus.

Daraufhin wurden 10 ml eines Öl (Isopropylmyristat, Sigma Aldrich), welches mit Sudanschwarz (Sigma Aldrich) angefärbt war, auf die Wasseroberfläche gegeben. Bei dessen Ausbreitung auf der Wasseroberfläche erreichte es schließlich das Flocktextil. Aufgrund der oleophilen Eigenschaft des Textils und unterstützt durch den Meniskus des Wassers wurde das Öl an die Oberfläche des Flocktextils adsorbiert. Die Verdrängung der Luftschicht unter Wasser durch das Öl dauerte nur wenige Sekunden. Der Transport in das Glasgefäß dauerte etwas länger. Sobald jedoch das Flocktextil vollständig benetzt war, wurde Öl innerhalb des Glasgefäßes wieder abgeschieden.

### Beispiel 2:

### Ölaufnahme mittels einer tauchenden Vorrichtung

Für den Öltaucher wurde eine Petrischale aus Plastik auf eine Halbkugel aus Plastik mit Epoxidharz aufgeklebt, sodass ein geschlossenes Volumen entstand. Die Klebestellen wurden zusätzlich mit Heißkleber (UHU) abgedichtet. An der Unterseite der Kugel wurden Gewichte befestigt, um das luftgefüllte Volumen unter Wasser halten zu können. In die Oberseite, die durch die Petrischale gebildet wurde, wurden zwei Löcher gebohrt. Zwei zugeschnittene Streifen eines Flocktextils (Faserlänge 1,2 mm, Dichte 13 Fasern pro mm², SwissFlock AG) mit einer Länge von 12 cm und einer Breite von 1 cm wurden mit Tegotop 210 (Evonik Industries) hydrophobiert. Die beiden Streifen wurden faserseitig übereinander gelegt und an einem Ende mittels eines Schrumpfschlauches fixiert. Dieses Ende wurde durch eines der Löcher in das Innere des Öltauchers geführt. Die Versiegelung wurde erneut mit Heißkleber durchgeführt. In die noch verbleibende Öffnung des Öltauchers wurde ein PVC Schlauch mit einem Durchmesser von 4 mm geführt, über den ein Druckausgleich zwischen dem inneren Volumen des Tauschers und der Umgebung hergestellt werden kann. Die gesamte Vorrichtung wurde in ein mit Wasser gefülltes Aquarium eingebracht. Der Taucher befand sich hierbei unterhalb der Wasseroberfläche. Die beiden losen Enden der beiden Flocktextile legten sich an die Wasseroberfläche an. Der PVC-Schlauch ragte über die Wasseroberfläche heraus. Die Versiegelungen hielten dem Wasser stand und das Innere des Tauchers blieb trocken.

Daraufhin wurden 10 ml eines Öls (Isopropylmyristat, Sigma Aldrich), welches mit Sudanschwarz (Sigma Aldrich) angefärbt war, auf die Wasseroberfläche gegeben. Dieses wurde an die Oberflächen der Flocktextile adsorbiert und bedeckten diese bereits nach wenigen Sekunden vollständig. Ebenfalls erfolgte ein Transport in den Öltaucher. Von den fixierten Enden, die innerhalb des Volumens an dessen Deckel fixiert waren, tropfte das Öl herunter. Hierbei wurde festgestellt, dass in etwa in gleichem Maße auch Wasser über das Flocktextil in das Innere des Öltauchers gelangte. Es wird vermutet, dass das ein zu großer Spalt zwischen den aufeinander gepressten Flocktextilien der Grund hierfür war. Es wird entsprechend davon ausgegangen, dass eine verbesserte Fixierung durch Druck, beispielsweise durch eine Klammer, Abhilfe schaffen sollte. Insgesamt konnte somit auch das Prinzip des Ölsammelns unter Wasser mit einer tauchenden Vorrichtung belegt werden.

**Bezugszeichenliste**

| | |
|---|---|
| Vorrichtung | 1 |
| Behälter | 2 |
| superhydrophobes Flächengebilde | 4 |
| Gasschicht | 6 |
| Wasseroberfläche | 8 |
| Öl | 10 |
| Deckel | 12 |
| Geschlossenes Behältnis | 14 |
| Einrichtung zum Druckausgleich | 16 |
| Öffnungen | 18 |
| Verankerung | 20 |
| Deckel | 24 |
| Eingangsöffnungen | 26 |

## Patentansprüche

1. Vorrichtung zum Aufnehmen von Öl (10) von einer Wasseroberfläche (8), umfassend einen Behälter (2) zur Aufnahme des Öls (10) und eine Öl-transportierende Einrichtung, wobei ein Bereich der Öl-transportierenden Einrichtung in Flüssigkeitsverbindung zu der Wasseroberfläche (8) bringbar ist und sich ein weiterer Bereich der Öl-transportierenden Einrichtung in dem Behälter (2) befindet, wobei das Öl (10) über die Öl-transportierende Einrichtung in den Behälter transportierbar ist, **dadurch gekennzeichnet, dass**
die Öl-transportierende Einrichtung aus einem hydrophoben Flächengebilde (4) ausgebildet ist, dessen Oberfläche filamentförmige Strukturen aufweist, welche derart ausgebildet sind, dass sie unter Wasser eine Schicht aus Luft (6) auf der Oberfläche des hydrophoben Flächengebildes (4) halten,
wobei sich für den Transport des Öls (10) ein Teil des Flächengebildes (4) unter der Wasseroberfläche (8) befindet und in Flüssigkeitsverbindung zum Wasser steht und ein anderes Ende des Flächengebildes (4) sich in dem Behälter (2) befindet, wobei sich ein Teil des Flächengebildes (4) in dem Behälter (2) unterhalb des Niveaus der Wasseroberfläche (8) befindet, wodurch das Öl (10) die Luftschicht (6) verdrängen und in den Behälter (2) fließen kann, und
wobei das Flächengebilde (4) als dreidimensionales Abstandstextil ausgebildet ist, welches zwei voneinander beabstandete Decklagen und Abstandsfäden, welche die Decklagen miteinander verbinden, umfasst, wobei die Abstandsfäden den filamentförmigen Strukturen des Flächengebildes entsprechen.

2. Vorrichtung nach Anspruch 1, **dadurch gekennzeichnet, dass** das Flächengebilde (4) in Form einer Mehrzahl an streifenförmigen Flächen ausgebildet ist, oder in Form einer durchgehenden Fläche, die um den Behälter (2) herum angeordnet ist.

3. Vorrichtung nach Anspruch 1 oder 2, **dadurch gekennzeichnet, dass** der Behälter (2) im Wasser schwimmt oder an der Wasseroberfläche (8) arretiert ist, wobei sich der Boden des Behälters (2) im ungefüllten Zustand unterhalb der Wasseroberfläche befindet.

4. Vorrichtung nach einem der vorhergehenden Ansprüche, **dadurch gekennzeichnet, dass** das Flächengebilde (4) über die Seitenwand des Behälters (2) oder durch schlitzförmige Öffnungen in der Seitenwand in den Behälter (2) geführt wird.

5. Vorrichtung nach einem der vorhergehenden Ansprüche, **dadurch gekennzeichnet, dass** der Behälter (2) einen Deckel (12) aufweist, wobei der Deckel (12) vorzugsweise ein Ventil zum Druckausgleich aufweist.

6. Vorrichtung nach einem der vorhergehenden Ansprüche, **dadurch gekennzeichnet, dass** der Behälter (2) ein geschlossenes Behältnis (14) ist, wobei das geschlossene Behältnis (14) eine Einrichtung zum Druckausgleich (16) aufweist.

7. Verfahren zum Aufnehmen von Öl (10) von einer Wasseroberfläche (8) mittels eines Behälters zur Aufnahme des Öls (10) und einer Öl-transportierenden Einrichtung, wobei ein Bereich der Öl-transportierenden Einrichtung in Flüssigkeitsverbindung zu der Wasseroberfläche (8) gebracht wird und sich ein weiterer Bereich der Öl-transportierenden Einrichtung in dem Behälter (2) befindet, wobei die Öl-transportierende Einrichtung aus einem hydrophoben Flächengebilde (4) ausgebildet ist, dessen Oberfläche filamentförmige Strukturen aufweist, welche derart ausgebildet sind, dass sie unter Wasser eine Schicht aus Luft (6) auf der Oberfläche halten, wobei das Öl (10) über das hydrophobe Flächengebilde (4) in den Behälter (2) transportiert wird,
wobei sich für den Transport des Öls (10) ein Teil des Flächengebildes (4) unter der Wasseroberfläche (8) befindet und in Flüssigkeitsverbindung zum Wasser steht und ein anderes Ende des Flächengebildes (4) sich in dem Behälter (2) befindet, wobei sich ein Teil des Flächengebildes (4) in dem Behälter (2) unterhalb des Niveaus der Wasseroberfläche (8) befindet, wodurch das Öl (10) die Luftschicht (6) verdrängt und in den Behälter (2) fließt, und
wobei das Flächengebilde (4) als dreidimensionales Abstandstextil ausgebildet ist, welches zwei voneinander beabstandete Decklagen und Abstandsfäden, welche die Decklagen miteinander verbinden, umfasst, wobei die Abstandsfäden den filamentförmigen Strukturen des Flächengebildes entsprechen.

8. Verwendung einer Vorrichtung (1) nach einem der Ansprüche 1 bis 6 zum Aufnehmen von Öl (10) von einer Wasseroberfläche (8).

## Claims

1. Device for taking up oil (10) from a water surface (8), comprising a container (2) for receiving the oil (10) and an oil-transporting means, wherein a portion of the oil-transporting means can be brought in fluid communication with the water surface (8) and another portion of the oil-transporting means is disposed within the container (2), wherein the oil (10) can be transported into the container via the oil-transporting means, **characterized in that**
the oil-transporting means is formed of a hydrophobic fabric (4), the surface of which comprises filament-shaped structures, which are designed such that they retain an air layer (6) on the surface of the hydrophobic fabric (4) under water,
wherein for the transport of the oil (10) a portion of the fabric (4) is located below the water surface (8) and is in fluid communication with the water and another end of the fabric (4) is located in the container (2), wherein a portion of the fabric (4) in the container (2) is located below the level of the water surface (8), whereby the oil (10) can displace the air layer (6) and flow into the container (2), and
wherein the fabric structure (4) is designed as a three-dimensional spacer textile which spacer textile comprises two outer layers spaced-apart from one another and spacer threads connecting the outer layers to one another, wherein the spacer threads correspond to the filament-shaped structures of the fabric.

2. Device according to claim 1, **characterized in that** the fabric (4) is designed in the form of a plurality of strip-shaped surfaces, or in the form of a continuous surface arranged around the container (2).

3. Device according to claim 1 or 2, **characterized in that** the container (2) floats in the water or is locked on the water surface (8), wherein the bottom of the container (2) in the unfilled state is disposed below the water surface.

4. Device according to any one of the preceding claims, **characterized in that** the fabric (4) is guided into the container (2) over the side wall of the container (2) or through slotshaped openings in the side wall.

5. Device according to any one of the preceding claims, **characterized in that** the container (2) comprises a lid (12), wherein the lid (12) preferably comprises a valve for pressure compensation.

6. Device according to any one of the preceding claims, **characterized in that** the container (2) is a closed container (14), wherein the closed container (14) comprises a means for pressure compensation (16).

7. Method for taking up oil (10) from a water surface (8) by means of a container for receiving the oil (10) and an oil-transporting means, wherein a portion of the oil-transporting means can be brought into fluid communication with the water surface (8) and another portion of the oil-transporting means is disposed within the container (2), wherein the oil-transporting means is formed from a hydrophobic fabric (4) the surface of which comprises filament-shaped structures which are designed such that they retain an air layer (6) on the surface under water, wherein the oil (10) is transported into the container (2) via the hydrophobic surface structure (4),
wherein for the transport of the oil (10) a portion of the fabric (4) is located below the water surface (8) and is in fluid communication with the water and another end of the fabric (4) is located in the container (2), wherein a portion of the fabric (4) in the container (2) is located below the level of the water surface (8), whereby the oil (10) displaces the air layer (6) and flows into the container (2), and
wherein the fabric structure (4) is designed as a three-dimensional spacer textile which spacer textile comprises two outer layers spaced-apart from one another and spacer threads connecting the outer layers to one another, wherein the spacer threads correspond to the filament-shaped structures of the fabric.

8. Use of a device (1) according to any one of claims 1 to 6 for taking up oil (10) from a water surface (8).

## Revendications

1. Dispositif de réception d'huile (10) d'une surface d'eau (8), comprenant
un contenant (2) servant à la réception de l'huile (10) et un moyen transportant de l'huile, une région du moyen transportant de l'huile pouvant être amenée en liaison fluidique avec la surface de l'eau (8) et une autre région du moyen transportant de l'huile se trouvant dans le contenant (2), l'huile (10) pouvant être transportée dans le contenant par le biais du moyen transportant de l'huile,
**caractérisé en ce que**
le moyen transportant de l'huile est réalisé à partir d'une structure plane hydrophobe (4) dont la surface présente des structures filamenteuses, lesquelles sont formées de telle sorte qu'elles retiennent une couche d'air (6) sur la surface de la structure plane hydrophobe (4) en dessous de l'eau,
une partie de la structure plane (4) se trouvant en dessous de la surface de l'eau (8) pour le transport de l'huile (10) et étant en liaison fluidique avec l'eau et une autre extrémité de la structure plane (4) se trouvant dans le contenant (2), une partie de la structure plane (4) dans le contenant (2) se trouvant en dessous du niveau de la surface de l'eau (8), de sorte que l'huile (10) puisse déplacer la couche d'air (6) et s'écouler dans le contenant (2), et
la structure plane (4) étant réalisée sous forme de textile d'espacement tridimensionnel, lequel comprend deux couches extérieures espacées l'une de l'autre et des fils d'espacement, lesquels relient les couches extérieures l'une à l'autre, les fils d'espacement correspondant aux structures filamenteuses de la structure plane.

2. Dispositif selon la revendication 1, **caractérisé en ce que** la structure plane (4) est réalisée sous la forme d'une pluralité de surfaces en forme de rubans, ou sous la forme d'une surface continue qui est disposée autour du contenant (2).

3. Dispositif selon la revendication 1 ou 2, **caractérisé en ce que** le contenant (2) flotte dans l'eau ou est bloqué sur la surface de l'eau (8), le fond du contenant (2) se trouvant en dessous de la surface de l'eau dans l'état non rempli.

4. Dispositif selon l'une des revendications précédentes, **caractérisé en ce que** la structure plane (4) est guidée sur la paroi latérale du contenant (2) ou à travers des ouvertures en forme de fentes dans la paroi latérale dans le contenant (2).

5. Dispositif selon l'une des revendications précédentes, **caractérisé en ce que** le contenant (2) présente un couvercle (12), le couvercle (12) présentant de préférence une soupape servant à la compensation de pression.

6. Dispositif selon l'une des revendications précédentes, **caractérisé en ce que** le contenant (2) est un récipient fermé (14), le récipient fermé (14) présentant un moyen servant à la compensation de pression (16) .

7. Procédé de réception d'huile (10) d'une surface d'eau (8) au moyen d'un contenant servant à la réception de l'huile (10) et d'un moyen transportant de l'huile, une région du moyen transportant de l'huile pouvant étant amenée en liaison fluidique avec la surface de l'eau (8) et une autre région du moyen transportant de l'huile se trouvant dans le contenant (2), le moyen transportant de l'huile étant réalisé à partir d'une structure plane hydrophobe (4) dont la surface présente des structures filamenteuses, lesquelles sont formées de telle sorte qu'elles retiennent une couche d'air (6) sur la surface en dessous de l'eau, l'huile (10) étant transportée dans le contenant (2) par le biais de la structure plane hydrophobe (4),
une partie de la structure plane (4) se trouvant en dessous de la surface de l'eau (8) pour le transport de l'huile (10) et étant en liaison fluidique avec l'eau et une autre extrémité de la structure plane (4) se trouvant dans le contenant (2), une partie de la structure plane (4) dans le contenant (2) se trouvant en dessous du niveau de la surface de l'eau (8), de sorte que l'huile (10) déplace la couche d'air (6) et s'écoule dans le contenant (2), et
la structure plane (4) étant réalisée sous forme de textile d'espacement tridimensionnel, lequel comprend deux couches extérieures espacées l'une de l'autre et des fils d'espacement, lesquels relient les couches extérieures l'une à l'autre, les fils d'espacement correspondant aux structures filamenteuses de la structure plane.

8. Utilisation d'un dispositif (1) selon l'une des revendications 1 à 6 pour la réception d'huile (10) d'une surface d'eau (8).
